# EUROPEAN PATENT APPLICATION

(11) **EP 4 456 240 A1**
(43) Date of publication of application: **30.10.2024**
(21) Application number: 22910265.2
(22) Date of filing: 19.12.2022
(51) Int. Cl.: H01M 10/0565, H01M 10/058, H01M 6/18, H01M 4/60

(54) **SOLID ELECTROLYTE, MANUFACTURING METHOD AND IMPREGNATION METHOD THEREOF**

(30) Priority: 20.12.2021 ES 202131179
(71) Applicant: M. Torres Diseños Industriales, S.A., 31119 Torres de Elorz (Navarra) (ES)
(72) Inventor: TORRES MARTINEZ, Manual, Deceased (ES); LOPEZ ARANGUREN, Pedro, 31119 TORRES DE ELORZ (NAVARRA) (ES); ORUE MENDIZABAL, Ander, 31119 TORRES DE ELORZ (NAVARRA) (ES); AGUESSE OLAIZOLA, Frederic, 31119 TORRES DE ELORZ (NAVARRA) (ES)
(74) Representative: Evens, Paul Jonathan
(86) International application number: PCT/ES2022/070809
(87) International publication number: WO 2023/118631

(57) **Abstract**

The present invention relates to a solid electrolyte for lithium batteries having porous electrodes, which comprises a mixture of PEO and lithium salts, characterised in that the PEO mixture comprises 80% of PEO with a low average molecular weight and 20% of PEO with a high average molecular weight, wherein the solid electrolyte is configured to impregnate one or more electrodes of the battery. The invention further relates to the method for manufacturing the solid electrolyte of the invention and to the method for manufacturing electrodes impregnated with the solid electrolyte of the invention.

## Description

### Technical field

The present invention belongs to the field of electrolytes for batteries, more specifically to the field of solid electrolytes, and it relates to a specific solid electrolyte composition to be impregnated into electrodes, so that said impregnated electrode exhibits both improved properties and optimal properties in relation to ionic conductivity. The invention further relates to the method for manufacturing the solid electrolyte of the invention and to the method for manufacturing electrodes impregnated with the solid electrolyte of the invention.

### Prior art

Currently, the most used electrochemical batteries are lithium-ion batteries, due to their great energy accumulation capacity and the large number of charge and discharge cycles they can withstand.

One of the key components inside the battery is the electrolyte, responsible for connecting both electrodes (anode and cathode) and allowing Li ions to move between one and the other, so that an electric current is in turn generated.

Although the use of liquid electrolyte batteries has prevailed in recent years, the drawbacks that they have both in terms of manufacturing process and safety, as well as its limited energy density, have made the sector begin to further explore the field of solid electrolytes to solve these problems. Different materials can be selected for the solid electrolyte (ceramic electrolytes, polymer electrolytes, glass electrolytes, etc.), among which the polymer electrolyte solution offers a series of advantages that have positioned this option as the one with the greatest industrial application today.

In turn, polymer solid electrolyte batteries are not without problems. In conventional solid electrolyte batteries, the electrolyte, in addition to allowing ions to move, acts as a barrier between the two electrodes of the battery to avoid possible short circuits. One of the weaknesses of solid electrolyte batteries compared to liquid electrolyte batteries today is ionic conductivity, since, in the latter, the fact that the liquid covers the entire interior of the battery favours the circulation of ions through the same.

In the case of a polymer solid electrolyte battery, not only is it necessary to look for a material to implement the electrolyte that allows good circulation of ions, but it is also necessary to maximise the contact between the electrolyte layer and the active materials of both electrodes. If the contact is not good, the charge/discharge capacity and power density of the battery suffer.

To thus improve the properties of batteries with a polymer solid electrolyte, using different polymers or mixtures of polymers as an electrolyte or including different salts in the formulation of the electrolyte, for example, have been tested. Options known in the state of the art present polyethylene oxide (PEO) electrolytes and lithium salts such as LiTFSI, where thin electrolyte membranes can be manufactured with these materials. Nevertheless, the existing solid-state batteries at present are far from achieving equivalent ionic conductivity values to those of liquid electrolyte batteries.

Next, known documents that are considered to be the state of the art closest to the present invention are cited:
Patent US20180261877A1 focuses on a solid electrolyte that includes a second lithium salt in its composition. Different compositions by weight of PEO and lithium salt (such as, for example, LiTFSI), but not specific PEO mixtures, are mentioned. This document does not anticipate a mixture of PEO with different molecular weights to increase ionic conductivity, since it does not disclose or give any indication that the mixture of molecular weights affects the ionic conductivity or the performance of the battery.

Patent KR19980061922A focuses on improving ionic conductivity through chemical crosslinking of PEO polymers or copolymers, without relating the molecular weights of said polymers or copolymers to the ionic conductivity.

Likewise, patent WO0117051A1 discloses a base polymer or mixture of base polymers, one of them possibly being polyethylene oxide (PEO), to which inorganic fillers are added in order to improve ionic conductivity, but it makes no mention of the impact of the mixture of PEOs with different molecular weights on the ionic conductivity, nor does it mention an improvement in the electrochemical performance of the battery.

In view of the background documents found, although they disclose an improvement in ionic conductivity, none of them discloses or suggests a characteristic combination of PEO molecular weights that favours improved ionic conductivity or electrochemical performance of the resulting battery, as achieved in the present invention.

### Object of the invention

The present invention proposes a specific solid electrolyte formulation for electrochemical batteries based on lithium ion, using polyethylene oxide (or PEO) as the main component. The electrolyte of the present invention is characterised in that it uses a specific mixture of different specific molecular weights of said PEO. Said electrolyte offers a favourable response in terms of properties for batteries that comprise electrodes impregnated with the electrolyte of the present invention, obtaining greater ionic conductivity and similar electrochemical performance, compared to batteries with electrodes impregnated with PEO solid electrolytes. Said solid electrolyte is therefore used to impregnate one or more electrodes of a lithium battery.

The solid electrolyte of the invention is characterised by its chemical composition, more specifically in that it comprises a PEO mixture composed of 65-85% of PEO with a low average molecular weight and 35-15% of PEO with a high average molecular weight, preferably 75-85% and 25-15% of PEO with a low and high molecular weight, respectively, and even more preferred 80% and 20% of PEO with a low and high molecular weight, respectively. High average molecular weight for PEO is understood to be values greater than or equal to 10⁶ Da, preferably 1·10⁶ Da. Low average molecular weight for PEO is understood to be values greater than or equal to 4·10² Da and less than or equal to 5·10⁴ Da, preferably 2·10⁴ Da.

The composition of the solid electrolyte of the invention and of the most preferred solid electrolyte of the invention is therefore shown schematically in the following Table:

| **Solid electrolyte** | **PEO with a low molecular weight (≥4·10² Da and ≤5·10⁴ Da) (wt. %)** | **PEO with a low molecular weight (e.g., 2·10⁴ Da) (wt. %)** | **PEO with a high molecular weight (≥ 10⁶ Da) (wt. %)** | **PEO with a high molecular weight (e.g., 10⁶ Da) (wt. %)** |
|---|---|---|---|---|
| Electrolyte of the invention | 65-85 | - | 35-15 | - |

| | | | | |
|---|---|---|---|---|
| Preferred electrolyte of the invention | - | 80 | - | 20 |

The selection of these particular ranges of percentages of PEO with a low average molecular weight and PEO with a high average molecular weight results in a series of advantages or technical features, optimising ionic conductivity, electrochemical performance, and obtaining an adequate degree of impregnation of the electrolyte inside the porous electrodes.

The composition of the electrolyte is completed by adding a lithium salt that provides the lithium ions necessary to promote the reversible chemical reaction. Examples of viable lithium salts for the solid electrolyte of the invention are LiBF₄, LiClO₄, LiPF₆, LiAsF₆ or USO₃CF₃, or combinations thereof, without being limited to these lithium salts. The lithium salt is preferably lithium bis(trifluoromethanesulfonyl)imide (LiTFSI). The polyethylene oxide and lithium salt can be mixed according to a preferred PEO:Li mixture ratio of 20:1.

In a first embodiment, the invention relates to a solid electrolyte for lithium batteries having porous electrodes, which comprises a mixture of PEO and lithium salts, characterised in that the PEO mixture comprises 65-85% of PEO with a low average molecular weight and 35-15% of PEO with a high average molecular weight, wherein the solid electrolyte is configured to impregnate one or more electrodes of the battery.

More preferably, the PEO mixture comprises 80% of PEO with a low average molecular weight and 20% of PEO with a high average molecular weight.

With regard to the average molecular weight of the PEO, the weight of the PEO with a high average molecular weight is greater than or equal to 10⁶ Da and the weight of the PEO with a low average molecular weight is greater than or equal to 4·10² Da and less than or equal to 5·10⁴ Da.

More preferably, the weight of the PEO with a high molecular weight is 1·10⁶ Da and the weight of the PEO with a low average molecular weight is 2·10⁴ Da.

For the solid electrolyte of the invention, a ratio between PEO and lithium salt by weight (PEO:Li) of 20:1 is preferable.

For the solid electrolyte of the invention, it is preferable that the lithium salt is lithium bis(trifluoromethanesulfonyl)imide (LiTFSI).

In an alternative of the invention, the solid electrolyte may comprise an additional insulating membrane or layer of PEO electrolyte with an average molecular weight greater than 1·10³ Da, preferably with an average molecular weight of 5·10⁶ Da.

The invention further relates to the method for manufacturing the solid electrolyte of the invention.

Another embodiment of the invention relates to the method for manufacturing the electrode impregnated with the electrolyte of the invention, applying pressure and at a temperature of 70-100°C, for a period of time between 6-24 hours.

The method for manufacturing the electrode impregnated with the electrolyte of the invention preferably carries out the impregnation by applying vacuum, at an impregnation temperature of 100°C and an impregnation time of 6 hours.

The invention further relates to the lithium-ion battery comprising at least one porous electrode and a solid electrolyte according to any one of the previous embodiments, impregnated in at least one of the two porous electrodes of the battery.

### Description of the Figures

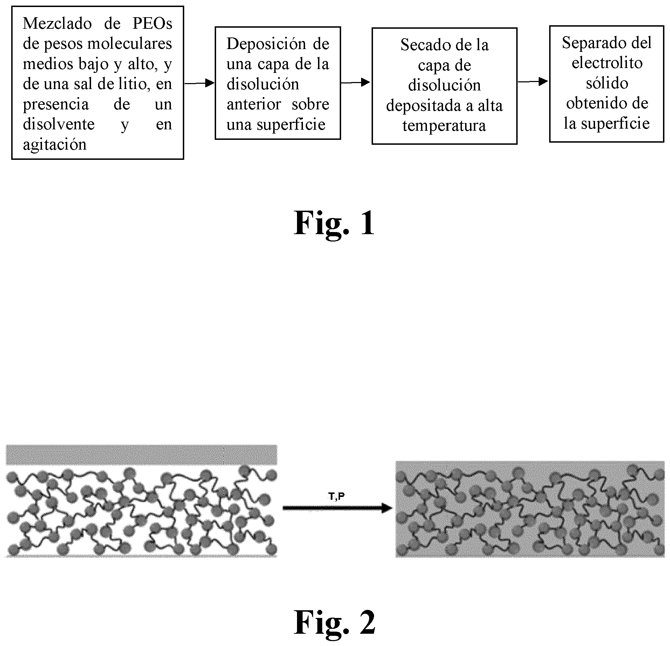

Figure 1 shows a block diagram of the complete method for manufacturing the solid electrolyte of the present invention, which starts with a PEO with different molecular weights and one or more lithium salts.
Figure 2 schematically shows the method for impregnating an electrode (lower layer) with the solid electrolyte of the invention (upper layer), before and after impregnation, by applying high temperature (T) and pressure (P).

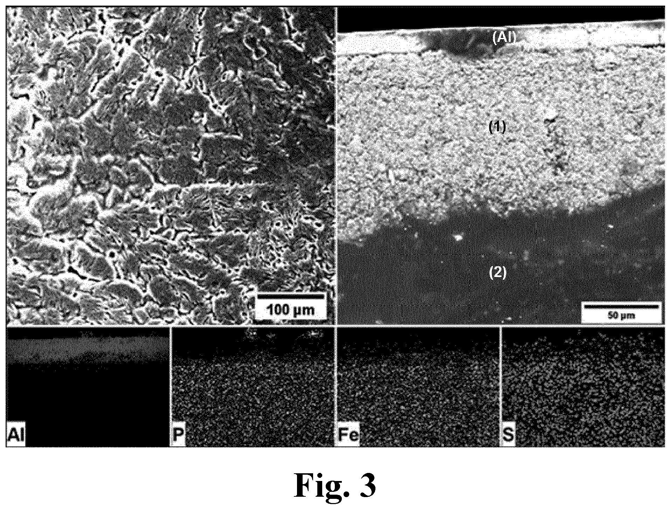

Figure 3 shows the microstructure and the elemental chemical composition of the electrode impregnated with the electrolyte of the present invention. The microstructure is shown with a top view (Figure 3, left) and a cross section (Figure 3, right) of the impregnated electrode, views that correspond to micrographs obtained with a scanning electron microscope. Elemental analysis was performed using energy-dispersive X-ray fluorescence (EDX) for the aluminium (Al), phosphorus (P), iron (Fe) and sulphur (S) elements.

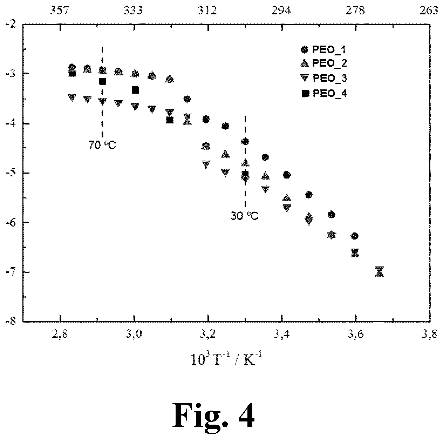

Figure 4 shows the obtained ionic conductivity (log (σ), in S/cm) for different solid electrolytes as a function of the inverse of temperature (in K⁻¹). The solid electrolytes studied include both conventional solid electrolytes without mixtures of molecular weights (PEO_3 with an average molecular weight of 10⁵ Da and represented with "downward-pointing triangles" and PEO_4 with an average molecular weight of 5·10⁶ Da and represented with "squares") and the solid electrolytes of the present invention prepared from mixtures of PEO with a low average molecular weight and high average molecular weight (PEO_1 represented with "circles" and PEO_2 represented with "upward-pointing triangles").

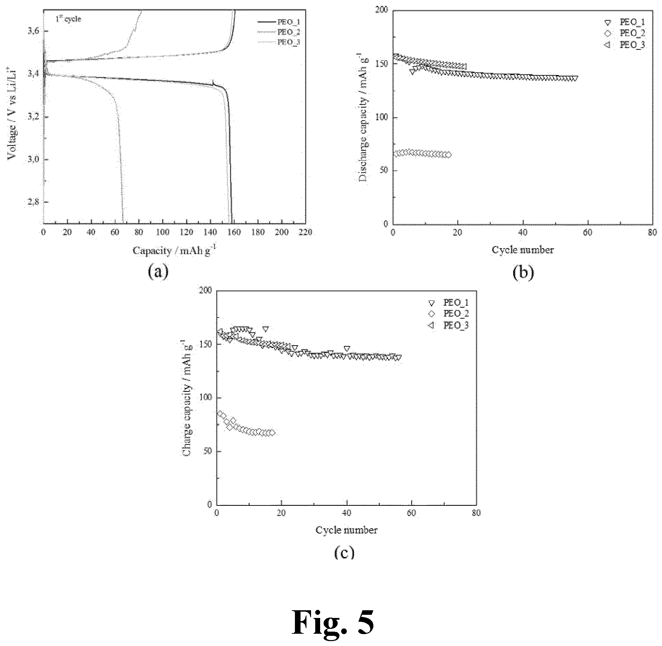

Figure 5 shows different characteristic parameters of electrochemical performance for a conventional lithium iron phosphate (LFP or LiFePO₄) positive electrode (cathode) impregnated with a solid electrolyte of the present invention (PEO_1 or PEO_2), or with a conventional electrolyte (PEO_3 which is PEO with an average molecular weight of 10⁵ Da). These parameters are the voltage profile of the first charge and discharge cycle (Figure 5A), and the charge and discharge capacity as a function of the number of charge and discharge cycles (Figure 5B-5C).

### Detailed description of the invention

In the present invention, a polymer solid electrolyte of a specific composition has been designed for the impregnation of electrodes for solid-state batteries. The polymer allows all or a high percentage of the volume of the laminated electrodes to function through an impregnation method based on applying temperature and additionally applying at least pressure or vacuum, preferably both.

Said polymer solid electrolyte is based on the polymer of polyethylene oxide (PEO). The composition of the solid electrolyte specifically comprises PEOs with different molecular weights, and also one or more ionic conductive lithium salts.

The solid electrolyte of the invention is characterised by its chemical composition, more specifically in that it comprises a PEO mixture composed of 65-85% of PEO with a low average molecular weight and 35-15% of PEO with a high average molecular weight, preferably 75-85% and 25-15% of PEO with a low and high molecular weight, respectively, and even more preferably for the practical embodiment of the invention of 80% and 20% of PEO with a low and high molecular weight, respectively.

The weight of the PEO with a high average molecular weight is greater than or equal to 1·10⁶ Da and the weight of the PEO with a low average molecular weight is greater than or equal to 4·10² Da and less than or equal to 5·10⁴ Da.

In a preferred embodiment, the weight of the PEO with a high average molecular weight is 1·10⁶ Da and the weight of the PEO with a low molecular weight is 2·10⁴ Da.

The composition of the electrolyte is completed by adding one or more ionic conductive lithium salts, or a combination of lithium salts. This lithium salt is preferably lithium bis(trifluoromethanesulfonyl)imide (LiTFSI). The polyethylene oxide and lithium salt can be mixed in different weight ratios of PEO:Li, preferably with a PEO:Li mixture ratio of 20:1.

Surprisingly, it has been observed that the electrolyte of the invention exhibits optimal ionic conductivity and melting temperature for impregnation. These properties are optimised even further for the preferable solid electrolyte of the invention, in other words, the solid electrolyte with 80% of PEO with a low average molecular weight of 2·10⁴ Da and 20% of PEO with a high average molecular weight of 1·10⁶ Da.

Batteries that use one or more electrodes impregnated with the solid electrolyte of the present invention exhibit improved ionic conductivity and improved electrochemical performance over known batteries. Electrochemical performance of the battery is understood as its charge and discharge capacity and its power density, which also affect the number of cycles in which the battery can operate under optimal conditions.

The properties of the solid electrolyte of the invention facilitate impregnation with one or more electrodes of a solid state lithium-ion battery (SSB). The solid electrolyte of the present invention is capable of obtaining complete impregnation or wetting of the electrode particles, which is important to obtain optimal and even improved properties of the electrodes and the battery where said electrodes are used, such as ionic conductivity or electrochemical performance of the battery. In fact, by optimising the impregnation of the electrolyte in the porous electrodes, the contact between the electrode and the electrolyte is increased, which provides greater ionic conductivity and electrochemical performance of the battery that uses said electrode impregnated with the electrolyte of the invention.

In the present invention, it has been surprisingly observed that the most complete impregnation of the electrode by the solid electrolyte is achieved only for the particular range of polymer or PEO composition that characterises the solid electrolyte of the present invention, in other words, it is only achieved for the mixture of polyethylene oxides with different molecular weights, with 65-85% of PEO with a low average molecular weight and 15-35% of PEO with a high average molecular weight. In the preferred embodiment, the cathode is composed of lithium iron phosphate (LiFePO₄) and the anode is composed of metal lithium, where other options such as lithium titanate (Li₂TiO₃), graphite mixtures or other known options for the anode material can be used for the anode. Both the anode and the cathode can be impregnated with the solid electrolyte of the present invention, as long as they have a porous composition.

Furthermore, in a preferred configuration of the invention, the solid electrolyte proposed is accompanied by another layer of an additional electrolyte with a different formulation, being configured in a multi-layer system. This additional electrolyte layer serves to ensure the separation between the cathode and the anode in the battery that comprises the impregnated electrode(s), improving the stability of the electrolyte inside the battery against possible uncontrolled infiltrations of the electrolyte. The additional electrolyte consists of a base layer of PEO with a high average molecular weight, for example, PEO with an average molecular weight of 5·10⁶ Da. The electrolyte of the invention is placed as an outer layer on at least one side of the base electrolyte. This outer electrolyte, which consists of the electrolyte of the present invention, is known as a catholyte in the case of being incorporated on the face in contact with the cathode, and as an anolyte in the case of being incorporated on the face in contact with the anode.

The invention further relates to the method for manufacturing the electrode impregnated with the solid electrolyte of the invention.

To obtain the solid electrolyte of the present invention, the method starts with PEO with a low average molecular weight, PEO with a high average molecular weight, and one or more lithium salts.

Thus, in a first step, after selecting 65-85% of PEO with a low average molecular weight and 35-15% of PEO with a high average molecular weight, PEOs are mixed together with one or more lithium salts in solution, in a solvent capable of dissolving PEO and lithium salts, preferably using anhydride acetonitrile (ACN) as a solvent. Mixing can be carried out in any conventional mixing device, such as a laboratory mixer or an industrial scale mixing reactor, without being limited thereto. Mixing is carried out with stirring and the time required for the dissolution and homogeneous mixing of both components, for example at 300 rpm for 24 hours.

In a second step, a layer of the solution obtained in the first step with the required thickness of the solid electrolyte or final polymer membrane to be obtained is deposited on a surface where said solution can be subsequently dried. As a non-limiting example, a 2 mm thick liquid layer, for example, can be deposited, for example, on a flat sliding surface using a blade, producing a layer of controlled thickness (deposition or coating technique known as blade casting or knife coating). The surface can be, for example, a polymer film with a micrometric thickness, for example, made of polyester or PET, such as a Mylar^{®}film.

In a third step, the layer of deposited solution is dried so that it dries, forming the solid electrolyte or final polymer membrane. Drying can be carried out at any temperature and time that provides adequate drying of the deposited solution, such as at 50°C for 12 hours, without being limited to these parameters. Optionally, drying can be carried out under dynamic vacuum conditions.

The solid electrolyte obtained by the preceding manufacturing method finally detaches from the surface on which it has been deposited, and it has the form of a polymer membrane that is easy to handle and use.

This method for manufacturing the membrane is also represented schematically in Figure 1.

### Method for manufacturing the electrode impregnated with the solid electrolyte:

The polymer solid electrolyte of the present invention can be used for the impregnation of one or more electrodes for lithium-ion batteries. These electrodes can be conventional electrodes used for lithium batteries, for example, for batteries with liquid electrolytes, both positive electrodes (cathodes) and negative electrodes (anodes). The cathode is preferably made of lithium iron phosphate (LiFePO₄) and the anode is preferably made of metal lithium, where other options such as lithium titanate (Li₂TiO₃), graphite mixtures or other known options for the anode material can be used for the anode. Impregnation has been tested for different electrodes, with a different load of active material (from 2 to 3.5 mAh/cm²) and with a different porosity (30-50%). In fact, if there were no porosity in the electrode, it would not be possible to infiltrate the solid polymer electrolyte into the same.

The infiltration capacity of the solid electrolyte proposed allows the contact surface between the active material and the electrolyte to be lifted, which implies an improvement in the internal resistance and in the maximum intensity that the battery can withstand.

The main advantage of the developed polymer solid electrolyte, among the various compositions and infiltration conditions explored, lies in the fact that its characteristic composition surprisingly allows the possibility of completely infiltrating the volume of the electrode, in other words, it fills the pores of a traditional cathode or anode, covering all its particles, which directly affects its electrochemical properties, such as the ionic conductivity and electrochemical performance of the resulting lithium battery.

Any thickness can be selected for the solid electrolyte of the invention to be impregnated, where it is preferable that the thickness be sufficient to allow at least partial impregnation and preferably complete impregnation of the electrode, further minimising the thickness of the remaining electrolyte that is outside the impregnation of the electrode. The thickness of the solid electrolyte to be used therefore depends on the thickness of the electrode, and more specifically on the volume of the pores of the electrode.

Furthermore, if a thickness of the solid electrolyte greater than the thickness required to completely impregnate the solid electrolyte is used (i.e., excess thickness), the excess thickness of the solid electrolyte of the invention can act as the additional layer of base electrolyte, and therefore part or all of the additional layer of base electrolyte can be dispensed with. The additional layer of base electrolyte refers to the aforementioned layer that serves to ensure the separation between the cathode and the anode in the battery that comprises the impregnated electrode(s), avoiding direct contact between the electrodes and the risk of short circuits, stabilising the behaviour of the battery. This additional base layer electrolyte can be, for example, PEO with a high average molecular weight, for example 5·10⁶ Da.

To impregnate the solid electrolyte of the invention in the electrode, a porous electrode is used, and the solid electrolyte is placed in direct contact with the electrode, at the same time that pressure and a temperature higher than the melting temperature of the material are applied for the time required to ensure that the polymer membrane of the solid electrolyte fills the pores and covers the particles of the electrode, impregnating it at least partially in this way. Optionally, a vacuum can be used to optimise the impregnation of the electrode, since the vacuum favours the extraction of air contained in the pores of the electrodes, and with this, a more complete impregnation of the electrode with the electrolyte can be achieved. The application of vacuum can replace or complement the application of pressure.

Preferably, the impregnation temperature is 70-100°C, even more preferably 100°C. Preferably, the impregnation time at this temperature is 6-24 hours, 6 hours being sufficient to completely impregnate the electrode, and it is expected that shorter times will also result in partial or complete impregnation of the electrode.

A diagram of the method for impregnating an electrode, for example, a commercial electrode, with the solid electrolyte of the invention, is shown in Figure 2. Figure 2 shows the electrode before and after being impregnated with the electrolyte, indicating that impregnation is carried out with the electrolyte (upper layer) in contact with the electrode (porous layer below), and applying pressure (P) and temperature (T) higher than 20°C, during the time required for impregnation. As a non-limiting example, impregnation can be carried out at 100°C for 6-24 hours.

The microstructure and chemical composition of the electrode impregnated with the electrolyte of the present invention is shown in Figure 3. In this figure, a top view of the electrode impregnated with the solid electrolyte (Figure 3, left) as well as a cross-sectional view (Figure 3, right) are shown, all of them micrographs obtained with a scanning electron microscope at 20 kV. The electrode shown in Figure 3 (Figure 3, right, clear layer (1)) is a commercial 83% lithium iron phosphate (LFP or LiFePO₄) electrode with a porosity of 57%, and the electrolyte is the electrolyte of the invention for which the lithium bis(trifluoromethanesulfonyl)imide (LiTFSI) salt is used. The impregnation of the electrolyte in the electrode for this particular case was carried out by heating to 100°C in a vacuum oven, at a pressure of 10 mbar for 24 hours, in order to ensure complete impregnation of the electrode.

The top view (Figure 3, left) shows that, for this particular example, a residual layer of the electrolyte remains on top of the electrode, which does not allow the morphology of the electrode to be seen, which, on the contrary, can be seen in the cross section (Figure 3, right), which shows the layer of impregnated electrode (clear layer (1)) and the layer of unimpregnated electrolyte (dark layer (2)).

Furthermore, the elemental chemical composition of the electrode (1) and electrolyte (2) areas are shown in Figure 3 (right), obtained by energy-dispersive X-ray fluorescence (EDX), and performed in the same scanning electron microscope. The chemical composition is specifically characterised for the aluminium (Al) of the aluminium film which function is to act as a support for the sample to be observed and as an electrical collector to remove the current generated inside the battery (upper layer (Al) in Figure 3, right), for the phosphorus (P) and iron (Fe) of the electrodes, and for the sulphur (S) of the electrolyte, specifically the sulphur from the lithium salt that is part of the electrolyte.

Figure 3 shows that sulphur is arranged throughout the LiFePO₄ electrode (2), thus confirming the complete impregnation of the electrolyte of the invention in the electrode.

Lastly, it should be noted that only some embodiments of the invention are described herein; therefore, the person skilled in the art will understand that other equivalent or alternative embodiments of the invention, as well as its obvious and equivalent modifications, are also possible. For this reason, the scope of the aspects of the invention should not be limited to the specific embodiments specifically described.

### Practical exemplary embodiment of the solid electrolyte of the invention:

In a practical example of the solid electrolyte of the invention, different ranges of compositions within the range of compositions of the electrolyte of the present invention were experimentally evaluated, in order to characterise the properties of the resulting solid electrolytes according to the present invention.

To that end, PEOs with a different molecular weight were used in different percentages, creating both PEO mixtures according to the invention (Electrolytes PEO_1 and PEO_2) and pure PEO samples used as comparative samples (Electrolytes PEO_3 and PEO_4).

The different polymer solid electrolyte samples obtained are summarised in the following Table:

| **Electrolyte** | **PEO 10³ Da wt.%** | **PEO 2·10⁴ Da wt.%** | **PEO 10⁵ Da wt.%** | **PEO 10⁶ Da wt.%** | **PEO 5·10⁶ Da wt. %** | **ACN:PEO wt. Ratio** |
|---|---|---|---|---|---|---|
| PEO_1 | - | 80 | - | 20 | - | 4.5 |
| PEO_2 | 80 | - | - | 20 | - | 4.0 |
| PEO_3 | - | - | 100 | - | - | 4.0 |
| PEO_4 | - | - | - | - | 100 | - |

These samples were obtained by mixing the previous PEOs or mixtures of PEOs with the lithium salt LiTFSI, and dissolving them in anhydride acetonitrile (ACN) in the ACN:PEO weight ratio indicated in the table for each sample, at a weight ratio between PEO and lithium salt PEO:Li of 20:1. Subsequently, a 2mm thick layer of the solution was applied using a knife (blade casting) on a Mylar^{®} polyethylene terephthalate (PET) polyester polymer film, and after drying said solution at 50°C for 12 hours, the different polymer solid electrolyte membranes were obtained.

For the preceding polymer solid electrolyte samples, their thermal properties were characterised and their ionic conductivity was measured. Additionally, these polymer solid electrolyte samples were also used to impregnate a lithium iron phosphate (LFP or LiFePO)₄) cathode in order to evaluate the electrochemical performance of this electrode impregnated with the solid electrolyte according to the invention.

### Melting temperature of the solid electrolyte of the invention:

The infiltration capacity of the electrolyte in the electrode depends directly on the viscosity of the material, and this viscosity is in turn linked, among other parameters, to its melting temperature. That is why the melting temperatures of the different electrolytes studied were characterised.

To that end, the thermal properties of the previous different solid electrolyte membranes were characterised by Differential Scanning Calorimetry (DSC), said membranes comprising both PEO mixtures according to the invention (Electrolytes PEO_1 and PEO_2) and pure PEO samples used as comparative samples (Electrolytes PEO_3 and PEO_4). The thermal properties obtained are shown in the following Table:

| **Sample** | **Warm-up sweep** | | | | | | **Cooling sweep** | | | |
|---|---|---|---|---|---|---|---|---|---|---|
| | **T_{g} (°C)** | **Tₘ₁ (°C)** | **ΔHₘ₁ (J/g)** | **Tₘ₂ (°C)** | **ΔHₘ₂ (J/g)** | **χ_{c} (%)** | **T_{c1} (°C)** | **ΔH_{c} (J/g)** | **T_{c2} (°C)** | **T_{g} (°C)** |
| PEO_4 | -41 | 65 | 67 | --- | --- | 45 | 36 | 77 | --- | --- |
| PEO_1 | -46 | 60 | 67 | 26 | 6 | 49 | 34 | 68 | --- | -38 |
| PEO_2 | -53 | 51 | 31 | 21 | 30 | 42 | 26 | 53 | 11 | -52 |

The results regarding the melting temperature (Tₘ₁) show a reduction in the melting temperature of the PEO mixtures according to the invention (Electrolytes PEO_1 and PEO_2) with respect to the comparative reference sample (PEO_4), especially for sample PEO_2 (Tₘ₁ = 51°C). Said melting temperature is optimal and allows better infiltration of the solid electrolyte of the invention in the electrode, which in turn is related to the ionic conductivity and electrochemical performance of the battery that comprises said impregnated electrode. Said lower melting temperature also allows the battery to operate at lower temperatures.

### Ionic conductivity of the solid electrolyte of the invention:

Greater ionic conductivity of the solid electrolyte allows an increase in the current intensity that a battery comprising an electrode impregnated with said electrolyte is capable of generating. Greater ionic conductivity also allows the useful life of the battery to be extended under the same level of intensity. In fact, ionic conductivity is one of the parameters that defines the internal resistance of the battery, a value that when reduced eliminates losses and therefore increases the performance of the battery it forms.

To that end, the ionic conductivity of the previous different solid electrolyte membranes was measured, said membranes comprising both PEO mixtures according to the invention (Electrolytes PEO_1 and PEO_2) and pure PEO samples used as comparative samples (Electrolytes PEO_3 and PEO_4). The ionic conductivity of said membranes (S/cm) as a function of the inverse of temperature (in Kelvin) is shown in Figure 4.

In said Figure 4, the conductivity values for all membranes measured at 30°C and 70°C, respectively, are noted. These values are also provided in the following Table:

| **Sample** | **Conductivity (S cm⁻¹)** | |
|---|---|---|
| | **30°C** | **70°C** |
| PEO_1 | 4.2 × 10⁻⁵ | 1.2 × 10⁻³ |
| PEO_2 | 1.5 × 10⁻⁵ | 1.1 × 10⁻³ |
| PEO_3 | 7.8 × 10⁻⁶ | 2.8 × 10⁻⁴ |
| PEO_4 | 9.3 × 10⁻⁶ | 7.0 × 10⁻⁴ |

As can be seen, the solid electrolyte samples that correspond to the electrolyte according to the invention, i.e., PEO_1 and PEO_2, exhibit the best ionic conductivity values throughout the temperature range, as shown in Figure 4 and in the preceding table for temperatures of 30°C and 70°C, compared to the rest of conventional PEO solid electrolyte membranes without mixtures of molecular weights PEO_3 and PEO_4. These values for PEO_1 are 4.2 × 10⁻⁵ S/cm at 30°C and 1.2 × 10⁻³ S/cm at 70°C. These values for PEO_2 are 1.5 × 10⁻⁵ S/cm at 30°C and 1.1 × 10⁻³ S/cm at 70°C.

This demonstrates that the PEO mixture in the ranges and molecular weights of the present invention provides an unexpected improvement in the ionic conductivity of solid electrolyte membranes, compared to conventional PEO solid electrolytes without mixtures of molecular weights.

Electrochemical performance of the battery with the electrode impregnated with the solid electrolyte of the invention:
Lithium iron phosphate (LFP or LiFePO₄) cathodes were impregnated with the previous different solid electrolyte membranes, said membranes comprising both PEO mixtures according to the invention (Electrolytes PEO_1 and PEO_2) and pure PEO samples used as comparative samples (Electrolytes PEO_3 and PEO_4). The impregnation of these cathodes with the different solid electrolyte membranes was carried out at 100°C for 24 hours, under vacuum conditions, generating a bilayer formed by the impregnated electrode and the excess thickness of the electrolyte (infiltrated electrode/solid electrolyte bilayer).

This bilayer (which acts as a cathode) was mounted on top of a lithium metal disc that acted as an anode. An additional base layer of PEO with a molecular weight of 5·10⁶ Da was placed between the anode and the cathode (although said additional base layer could be dispensed with given the excess thickness of solid electrolyte, i.e., the solid electrolyte layer of the bilayer, that can perform this function). Thus, a lithium battery was generated that allowed the battery to be charged and discharged, during which time the voltage profile of the first charge and discharge cycle was monitored, such as the charge and discharge capacity as a function of the number of charge and discharge cycles.

For samples PEO_1, PEO_2 and PEO_3, the voltage profile during the first charge cycle in Figure 5A, the discharge capacity of the battery as a function of the number of discharge cycles (Figure 5B), and the charge capacity of the battery as a function of the number of charge cycles (Figure 5C) are shown.

Figure 5 shows that the lithium iron phosphate (LFP or LiFePO₄) electrode for sample PEO_1 (corresponding to a solid electrolyte according to the invention) exhibited a good voltage profile during the first charge cycle, good initial charge and discharge capacity, and it maintained its charge and discharge capacity for at least the first 50 charge and discharge cycles. All these parameters, representative of electrochemical performance, are comparable to that of the same electrode impregnated with a PEO solid electrolyte that does not comprise a mixture of molecular weights (PEO_3), as shown in Figures5A-5C.

This demonstrates that a lithium battery with an electrode impregnated with the electrolyte of the invention exhibits electrochemical performance similar to that of electrodes impregnated with conventional PEO solid electrolytes without mixtures of molecular weights (i.e., it exhibits a charge/discharge capacity and power density similar to the battery). Furthermore, given the greater ionic conductivity of the electrolyte of the present invention, it is expected that the performance of a lithium battery with an electrode impregnated with the electrolyte of the invention exhibits greater electrochemical performance at high charge and discharge speeds. Also taking into account that the polymer solid electrolyte membrane according to the invention (PEO_1) exhibits better ionic conductivity than the electrolyte that does not comprise a mixture of molecular weights (PEO_3), it is concluded that the polymer solid electrolytes of the present invention exhibit optimal or even improved properties compared to conventional ones, and therefore they are highly advantageous for the impregnation of conventional electrodes for lithium batteries.

## Claims

1. A solid electrolyte for lithium batteries having porous electrodes, which comprises a mixture of PEO and lithium salts, **characterised in that** the PEO mixture comprises 65-85% of PEO with a low average molecular weight and 15-35% of PEO with a high average molecular weight, wherein the solid electrolyte is configured to impregnate one or more electrodes of the battery.

2. The solid electrolyte according to claim 2, wherein the PEO mixture comprises 80% of PEO with a low average molecular weight and 20% of PEO with a high average molecular weight.

3. The solid electrolyte according to claim 1, wherein the weight of the PEO with a high average molecular weight is equal to or greater than 1·10⁶ Da and the weight of the PEO with a low average molecular weight is greater than or equal to 4·10² Da and less than or equal to 5·10⁴ Da.

4. The solid electrolyte according to claim 3, wherein the weight of the PEO with a high average molecular weight is 1·10⁶ and the weight of the PEO with a low average molecular weight is 2·10⁴ Da.

5. The solid electrolyte according to any one of the preceding claims, wherein the ratio between PEO and lithium salt by weight (PEO:Li) is 20:1.

6. The solid electrolyte according to any one of the preceding claims, wherein the lithium salt is lithium bis(trifluoromethanesulfonyl)imide (LiTFSI).

7. The solid electrolyte according to any one of the preceding claims, comprising an additional insulating membrane or layer of PEO electrolyte with an average molecular weight greater than 1·10³ Da, preferably with an average molecular weight of 5·10⁶ Da.

8. A method for manufacturing an electrode impregnated with an electrolyte according to any one of the preceding claims, applying pressure and at a temperature of 70-100°C, for a period of time between 6-24 hours.

9. The method for manufacturing an impregnated electrode according to claim 8, wherein the impregnation is carried out by applying vacuum, at an impregnation temperature of 100°C and an impregnation time of 6 hours.

10. A lithium-ion battery comprising at least one porous electrode and a solid electrolyte according to any one of claims 1 to 7 impregnated in at least one of the two porous electrodes of the battery.
